# EUROPÄISCHE PATENTSCHRIFT

(11) **EP 2 044 333 B1**
(45) Veröffentlichungstag und Bekanntmachung des Hinweises auf die Patenterteilung: **10.02.2010**
(21) Anmeldenummer: 07801778.7
(22) Anmeldetag: 20.08.2007
(51) Int. Cl.: F15B 3/00, F04B 9/105

(54) **DRUCKÜBERSETZER MIT DOPPELSITZVENTIL**
PRESSURE BOOSTER WITH DOUBLE-SEAT VALVE
MULTIPLICATEUR DE PRESSION COMPRENANT UNE SOUPAPE À DOUBLE SIÈGE

(30) Priorität: 18.08.2006 DE 102006038862
(43) Veröffentlichungstag der Anmeldung: 08.04.2009
(73) Patentinhaber: Scanwill ApS, 6400 Sønderborg (DK)
(72) Erfinder: IVERSEN, Jesper Will, 6400 Sonderberg (DK)
(74) Vertreter: Schmidt, Axel
(86) Internationale Anmeldenummer: PCT/EP2007/007340
(87) Internationale Veröffentlichungsnummer: WO 2008/019889

(56) Entgegenhaltungen:
- EP-A- 0 825 348
- DE-C1- 19 714 100
- US-B1- 6 409 482

## Beschreibung

Die Erfindung betrifft einen Druckverstärker für Fluide, insbesondere für Hydraulikflüssigkeiten nach dem Oberbegriff des Anspruchs 1.

Ein derartiger Druckverstärker ist aus dem Europäischen Patent EP 0 825 348 B1 bzw. aus dem zugehörigen Deutschen Prioritätspatent DE 196 33 258 bekannt. Bei der aus diesen Patenten bekannten Konstruktion wird der niederdruckseitige Arbeitsraum des Verstärkerkolbens über einen Steuerkolben be- und entladen, der zwischen zwei Positionen hin und her geschossen wird - einer Ladeposition, in er den Niederduckarbeitsraum mit unter Niederdruck stehendem Fluid speist und einer entsprechenden Entladeposition.

Der bekannte Druckverstärker bedient sich allerdings eines als einstückiger Ventilschieber ausgestalteten Steuerkolbens. Dieser Ventilschieber weist einige besondere Konstruktionsmerkmale auf, um dem erklärten Ziel dieser Konstruktion gerecht zu werden. Laut der besagten Patente soll nämlich die Schwingungsneigung des Ventilschiebers bei hohen Arbeitsfrequenzen herabgesetzt und Resonanz vermieden werden, d. h. der Ventilschieber soll auch bei hohen Arbeitsfrequenzen möglichst extrem schnell und ohne dass sich ein eventuelles Prellen auswirken kann, über die Mündung der zum Niederdruckarbeitsraum des Verstärkerkolbens führenden Zylinderleitung hinweg geschossen werden - aus seiner Ladeposition, in der er die Zylinderleitung mit der Niederdruckspeiseleitung verbindet, in seine Entladeposition, in der er die Zylinderleitung mit der drucklosen Tankleitung verbindet. Dadurch soll der Zeitraum verkürzt werden, den der Ventilschieber für ein vollständiges und sauberes Umschalten von der Lade- in die Entladeposition (und umgekehrt) benötigt. So soll erreicht werden, dass der Druckverstärkerkolben bei hohen Arbeitsfrequenzen nicht unnötig lange warten muss, bis der Ventilschieber sauber umgeschaltet hat und dann der volle Strömungsquerschnitt des Ventils für das Be- oder Entladen des Niederdruckarbeitsraumes zur Verfügung steht.

Natürlich geht es hier bei jedem Arbeitstakt nur um Millisekunden, die gewonnen oder verloren werden können. Dennoch summieren sich auch kleine Zeitgewinne bei jedem Arbeitstakt beachtlich auf, wenn der Druckverstärker mit einer hohen Arbeitsfrequenz betrieben wird, um eine möglichst große Menge von unter Hochdruck gesetztem Öl abzugeben - der aus den genannten Patenten bekannte Druckverstärker erreicht nach deren Aussage eine respektable Abgabemenge auf der Hochdruckseite, nämlich mehr als 2,5 1/min, bei einer Arbeitsfrequenz von mehr als 30 Hz und einer maximalen Zuführungsmenge mehr als von 10 1/min.

Um eine derartige Leistung zu erreichen, setzt diese vorbekannte Konstruktion bei der Gestaltung des Ventilschiebers an.

Eine der beiden komplementären Maßnahmen, mit denen die Schwingungsfrequenz des Ventilschiebers weiter erhöht werden soll, besteht hier darin, dass der Ventilschieber auf seiner einen Seite mit dem Druck der Steuerleitung und auf seiner anderen Seite mit einem konstanten Druck beaufschlagt wird, nämlich dem als maximaler Betätigungsdruck zur Verfügung stehenden Druck aus der Niederdruckversorgungsleitung. So wirkt auf diese Seite eine konstant maximale Kraft ein. Diese zwingt dem Ventilschieber in der Phase des Umsteuerns ein Maximum an Beschleunigung auf. Der Schuss von der Lade- in die Entladeposition benötigt so möglichst wenig Zeit. Als unverzichtbare weitere Maßnahme sehen die besagten Patente zusätzlich eine spezielle Ausgestaltung des als Schiebeventil konzipierten Ventilschiebers vor. Der Ventilschieber soll nämlich so beschaffen sein, dass die mit ihrem Umfang gegen die Zylinderbohrung abdichtende Steuerscheibe nur von der einen Seite der Mündung der Zylinderleitung auf die andere Seite der Mündung der Zylinderleitung geschossen werden muss, um die Zylinderleitung statt mit der Niederdruckspeiseleitung nun vollständig mit der drucklosen Tankleitung zu verbinden und umgekehrt. Diese Steuerscheibe bildet das eigentliche, auch bei hohen Kolbengeschwindigkeiten von Prellschlägen unbeeinträchtigte, kurzhubig arbeitende und weitgehend massearme Schiebeventil. Die beiden Maßnahmen ergänzen sich.

Diese an sich recht vorteilhafte Ausbildung des Ventilschiebers als Schieberventil bringt jedoch einige gravierende Nachteile mit sich. Grundsätzlich ist die Herstellung eines Schieberventils ausgesprochen teuer. Denn die bei einem solchen Ventilschieber die beiden Ringraumabschnitte gegeneinander und gegenüber der Zylinderwand abdichtende Steuerscheibe muss mit kleinster Toleranz in der ihr zugeordneten Zylinderbohrung laufen. Das heißt, dass nicht nur die Steuerscheibe geschliffen, sondern vor allem auch die Zylinderbohrung gehohnt werden muss. Ein solches Hohnen der Zylinderbohrung ist ausgesprochen teuer.

Zum anderen ist eine solche Konstruktion auch ausgesprochen verschleißanfällig. Denn der Lauf der Steuerscheibe mit kleinster Toleranz muss ja über die Lebensdauer des Druckübersetzers hinweg aufrecht erhalten bleiben. Dies ist gerade dann kritisch, wenn der Ventilschieber mit extrem hohen Frequenzen laufen soll und der Ventilschieber daher im Laufe seines Lebens extreme Gleitwege zurücklegt. Schon kleinere, abrasiv wirkende Schmutzpartikel reichen bei den hier angestrebten hohen Frequenzen aus, um Riefen und dergleichen in der Steuerscheibe und/oder der Zylinderbohrung entstehen zu lassen und so die Qualität, mit der das Schieberventil abdichtet, zu vermindern bzw. dessen Dichtfunktion bis hin zur Unbrauchbarkeit außer Kraft zu setzen.

Hinzukommt, dass die Instandsetzung eines derartigen Schieberventils ausgesprochen aufwendig ist. Zum Zwecke der Instandsetzung muss nämlich die Zylinderbohrung neu gehohnt werden (die alternativ mögliche Verwendung eines neuen Gehäuses ist i. d. R. unwirtschaftlich, da das Schieberventil meist zusammen mit dem Verstärkerkolben in einem gemeinsamen Gehäuse untergebracht ist). Sie bekommt dadurch Übermaß, d. h. ihr Durchmesser wird größer. Dementsprechend kann dann kein serienmäßiges Schieberventil mehr in die neu gehonte Zylinderbohrung eingesetzt werden. Statt dessen muss ein als spezielles Ersatzteil konzipiertes Schieberventil eingesetzt werden, das an seinem Außenumfang ein entsprechendes Übermaß aufweist. Dies bedingt eine aufwendige Lagerhaltung und die kostspielige Anfertigung von Sonderbauteilen.

Druckübersetzer der hier in Rede stehenden Art können prinzipbedingt mit verschieden hohen Drücken gespeist werden und liefern dementsprechend hohe Drücke, ohne dass Umbau- oder Einstellungsmaßnahmen erforderlich sind. Da derartige Druckübersetzer sehr häufig mobil, etwa im Baustellenbetrieb, eingesetzt werden ist dies ein großer Vorteil - der Druckübersetzer nimmt in einem weiten Bereich mit dem Speisedruck vorlieb, der gerade zur Verfügung steht. Für den von den eingangs genannten Patenten vorgeschlagenen Druckübersetzer, der tatsächlich gebaut wird, ist bekannt, dass er sich dazu eignet mit Drücken von etwa 35 bis etwa 300 bar gespeist zu werden. Bei einem Druckübersetzungsverhältnis von beispielsweise 4:1 stehen damit hochdruckseitig etwa 140 bis 1200 bar zur Verfügung. Eine Speisung mit höheren Drücken, etwa 350 bar, 500 bar und höher ist bei diesem Druckübersetzer wegen der dann an der Steuerscheibe in ganz erheblicher Höhe auftretenden Leckageströme problematisch - es sei denn, es wird im Einzelfall eine sehr teure Steuerscheibe mit extrem genauer Passung verwendet, wodurch sich die Grenze u. U. noch etwas nach oben verschieben lässt. Soweit (z. B. im mobilen Einsatz) nur höhere Speisedrücke zur Verfügung stehen, müssen diese vor der Einspeisung in den Druckübersetzer heruntergedrosselt werden, was unökonomisch ist.

Dem gegenüber ist es Aufgabe der Erfindung, diese Nachteile zu vermeiden.

Die Erfindung löst diese Aufgabe nach Maßgabe des kennzeichnenden Teils des Anspruchs 1.

Die entscheidende Maßnahme ist hier die, dass die Steuerkolbeneinheit mehrere als Sitzventil ausgebildete und mit je einem Ventilsitz zusammenwirkende Elemente aufweist, die so gestaltet sind, dass eines der Elemente zeitweilig die mit der Niederdruckseite des Verstärkerkolbens verbindbare Niederdruckspeiseleitung P gegenüber der Zylinderleitung und der Abflussleitung abdichtet und das andere Element zeitweilig die mit der Niederdruckseite des Verstärkerkolbens verbindbare Abflussleitung gegenüber der Zylinderleitung und der Niederdruckspeiseleitung abdichtet.

Ein Sitzventil im Sinne der Erfindung ist dabei ein Ventil, das in geschlossenem Zustand an eine Gegenfläche angepresst ist und so vom Prinzip her leckagefrei abdichtet. Im Gegensatz dazu stehen die sog. Schieberventile, die nicht an der Gegenfläche anliegen, sondern mit der Gegenfläche einen (ggf. sehr kleinen) leckagehemmenden aber nicht leckagefreien Dichtspalt ausbilden.

Sobald erfindungsgemäß ausgestaltete Sitzventile verwendet werden, muss die Zylinderbohrung nicht mehr gehohnt werden, sondern kann mit wesentlich größeren Toleranzen und Oberflächenrauhigkeiten ausgeführt werden. Denn die Zylinderbohrung trägt als solche nicht mehr zur Abdichtung bei. Ihre einzige Aufgabe ist nurmehr die, die Steuerkolbeneinheit zu führen. Hierfür reicht eine einfache Übergangspassung bei gleichzeitig nicht allzu hohen Anforderungen an die Oberflächenrauhigkeit.

Die Herstellung eines Sitzventils ist ausgesprochen einfach. Um ein Sitzventil herzustellen, sind hauptsächlich konstruktive Maßnahmen an der Steuerkolbeneinheit zu treffen. Diese muss mit den entsprechenden Ventilkegeln ausgestattet werden. In günstigen Fällen erübrigen sich weitere Bearbeitungsmaßnahmen am Gehäuse. Ansonsten genügt es, die den Ventilkegeln am Gehäuse zugeordneten Auflageflächen in entsprechender Weise kegel- oder kugelförmig anzufräsen oder anzuschleifen. Dies verursacht keinen besonderen Aufwand.

Ein Sitzventil ist auch gegenüber abrasiv wirkenden Verschmutzungen weitestgehend unanfällig. Ein abrasiv wirkendes Partikel, das tatsächlich in den Ventilsitz hineingerät, wird dort entweder zertrümmert und damit unschädlich gemacht (Sand-bzw. Staubkorn) oder es behindert zwar die Abdichtwirkung des Ventils, dies aber nur zeitweilig, nämlich so lange, bis es ausgespült wird. Wesentliche Schäden am Ventilsitz verursachen derartige abrasive Partikel nicht. Das heißt, dass der erfindungsgemäße Druckübersetzer nicht nur entscheidend billiger ist, sondern in der Praxis auch deutlich zuverlässiger.

Schließlich ist ein Sitzventil dem bisher verwendeten Schiebeventil auch insoweit überlegen, als es stets vollkommen abdichtet - unabhängig von der Höhe des Druckunterschiedes, den es abzudichten gilt, tritt keine Leckage auf. Denn das Sitzventil wird umso fester auf seinen Sitz gepresst, desto höher der auf dem Ventil lastende Druck ist. Die druckbedingte Aufweitung der Zylinderbohrung und damit des Dichtspalts, die bei höheren Drücken dem Schiebeventil zu schaffen macht, spielt keine Rolle. Bei einem Schiebeventil ist das anders. Hier steigt der unvermeidliche Leckagestrom mit der Höhe des Druckunterschiedes, den es abzudichten gilt.

Auf Grund dessen ist der erfindungsgemäße Druckübersetzer wesentlich universeller verwendbar. Er kommt speiseseitig mit Drücken ab etwa 35 bar zurecht, wobei der maximal zulässige Speisedruck nur durch die Festigkeit des Druckübersetzers vorgegeben ist - der Speisedruck darf maximal so groß werden, dass, insbesondere auf der Hochdruckseite, weder akutes Versagen auftritt, noch Materialermüdung (wenn Dauerfestigkeit gewünscht ist) bzw. keine vorzeitige Materialermüdung (wenn nur eine bestimmte Zeitfestigkeit erreicht werden soll). In der Praxis lässt sich der erfindungsgemäße Druckübersetzer ohne Weiteres so dimensionieren, dass er speiseseitig auch mit Drücken von 500 bar bis 750 bar zurecht kommt, vorzugsweise auch noch höheren Drücken.

Die Erfindung geht mit der Verwendung von Sitzventilen einen ganz anderen Weg, als die vorbekannte Konstruktion. Sie zielt nicht darauf ab, die Steuerkolbeneinheit als solche immer schneller zu machen um so die Leistungsfähigkeit des Druckübersetzers zu verbessern. Statt dessen verlässt sie den durch die bekannten Konstruktionen vorgezeichneten Weg und zielt primär darauf ab, die Steuerkolbeneinheit und die ihr zugeordnete Zylinderbohrung entscheidend zu verbilligen, zunächst ohne besondere Rücksicht auf die maximal mögliche Arbeitsfrequenz des Steuerventils zu nehmen - die zudem tendenziell dadurch begrenzt ist, dass schmale Ventilsitze zum elastischen Prellen neigen.

Das vom Anspruch 1 vorgegebene Konzept ermöglicht es allerdings auf einem Umweg dann doch, die Leistungsfähigkeit eines Druckübersetzers wieder in die Region sehr anspruchsvoller Bereiche zu treiben. Denn dort, wo sehr hohe Abgabeleistungen von dem Druckverstärker verlangt werden, wird es auf Grund dieses Konzepts möglich, zu vertretbaren Kosten mehrere, vorzugsweise 2 bis 4 synchron arbeitende Ventile einzubauen - ähnlich dem Prinzip der Mehrventiltechnik moderner Verbrennungsmotoren. Der Niederdruckarbeitsraum des einzigen Druckverstärkerkolbens wird dann gleichzeitig über mehrere Ventile be- und entladen, d. h. der Strömungsquerschnitt, über den be- und entladen wird, wird deutlich größer. Dementsprechend schneller geht das Be- und Entladen vonstatten. Es kommt dann nicht mehr unbedingt darauf an, ob am Anfang und Ende des Be- und Entladetaktes durch einen sehr schnellen und besonders präzisen Umschaltvorgang noch Sekundenbruchteile gewonnen werden können.

Eine vorteilhafte Weiterbildung der Erfindung sieht vor, dass die beiden als Sitzventil ausgebildeten und mit je einem Ventilsitz zusammenwirkenden Elemente nicht miteinander verbunden sind. Auf diese Art und Weise kann zuverlässig vermieden werden, dass sich die beiden Sitzventile in Folge zu großer Fertigungstoleranzen im Einzelfall behindern - weil ein Ventil schon voll auf seinen Sitz gegangen ist, während das andere Ventil noch nicht vollständig geschlossen hat und zwangsläufig in zumindest teilweise geöffneter Stellung verbleibt.

Eine andere, hierzu alternative Weiterbildung sieht vor, dass die beiden Elemente miteinander verbunden sind. In Einzelfällen kann, entgegen dem zuvor Gesagten, auch diese Variante vorteilhaft sein. Dies insbesondere dann, wenn sich im Einzelfall herausstellt, dass die unvermeidliche Relativbewegung zweier nicht miteinander verbundener Elemente zu Störungen führt und man daher den erhöhten Aufwand dafür in Kauf nimmt, die beiden Elemente bei der Montage unter Einhaltung enger Toleranzen zu verbinden (z. B. per Presssitz) und so eine absolut synchrone Bewegung der beiden Elemente zu erzwingen.

Gemäß einer anderen vorteilhaften Weiterbildung ist vorgesehen, dass eines der Elemente kolbenförmig ausgebildet ist und einen mit einem kleineren Durchmesser gefertigten, stangenartigen und nur einseitig formschlüssig festgelegten Abschnitt bzw. Fortsatz zur Einwirkung auf das andere Element aufweist, der so lang ist, dass er zeitweilig über die Mündungen zweier mit der Zylinderbohrung verbundener Leitungen hinwegreicht. Der kolbenförmige Abschnitt bildet zusammen mit der Zylinderbohrung eine Gleitführung. So ist eine saubere Führung in der Zylinderbohrung gewährleistet und zwar auch des stangenartigen Abschnitts mit seinem an einer Seite freien, d. h. nicht-geführten Ende. Der stangenartige Abschnitt dient einerseits zur Einwirkung auf das andere Element und stellt andererseits auf einfache Art und Weise eigentliche hydraulische wirksame Element dar. Denn der stangenartige Abschnitt trägt dazu bei entweder die Abflussleitung oder die Niederdruckspeiseleitung mit der Zylinderleitung zu verbinden. Dementsprechend klein wird der Durchmesser des stangenartigen Abschnitts gegenüber dem größeren Durchmesser des ihn haltenden Kolbenabschnitts gewählt.

Eine weitere vorteilhafte Ausführungsform sieht vor, dass das andere der beiden Elemente ebenfalls kolbenförmig ausgebildet ist. Auf diese Art und Weise lässt sich sehr einfach eine präzise Führung auch des zweiten Elements sicherstellen.

Eine zur vorbeschriebenen Ausführungsform alternative, besonders vorteilhafte Variante sieht vor, dass das andere der Elemente kugelförmig ist. Dies ist ein entscheidender Vorteil im Hinblick auf die Herstellungskosten. Denn Kugeln mit gehärteter und erstklassig polierter Oberfläche sind Bauteile "von der Stange", die für geringe Cent-Beträge zugekauft werden können. Besonders vorteilhaft ist, dass ggf. Kugeln verwendet werden können, die bei Kugellagerherstellern als Ausschuss angefallen sind, weil sie den extrem engen Toleranzvorgaben für Kugellager nicht genügen - was sie allerdings für den vorliegenden Einsatzfall nicht unbrauchbar werden lässt.

Eine andere ausgesprochen vorteilhafte Ausführungsform sieht vor, dass das Element, das zeitweilig die mit der Niederdruckseite des Verstärkerkolbens verbindbare Niederdruckspeiseleitung gegenüber der Zylinderleitung und der Abflussleitung abdichtet, bei der Füllung des Niederdruckraums zwischen der Niederdruckleitung und der Zylinderleitung liegt und dabei derart in den ihm zugeordneten Zylinder gelagert ist, dass Fluid zur Füllung des Niederdruckraums von der Niederdruckspeiseleitung an dem besagten Element vorbei in die Zylinderleitung zum Niederdruckraum strömen kann. Vorteilhafterweise ist dies der einzige hydraulische Weg, über den der Niederdruckraum des Verstärkerkolbens mit unter Niederdruck stehendem Fluid gefüllt werden kann. Dies führt zu einer wesentlichen Vereinfachung. Denn diejenige Niederdruckleitung, die zur Ansteuerung der Steuerkolbeneinheit verwendet wird, wird gleichzeitig dazu eingesetzt, um den Niederdruckarbeitsraum zu füllen. Somit kann eine Niederdruckleitung entfallen. Dass dies Kosten spart, liegt auf der Hand.

Vorteilhafterweise ist neben dem anderen Element auch ein zusätzliches Führungselement zur zumindest zeitweiligen Führungs- bzw. Positionskontrolle dieses anderen Elements vorhanden. Auf diese Art und Weise wird verhindert, dass das andere Element im Zylinder irgendeine ungewünschte, sitzferne Position einnimmt. Ein solches Führungselement kann eine Feder sein. Die Verwendung einer Feder ist insoweit vorteilhaft, als dass es sich auch hier um ein billig zuzukaufendes Normbauteil handelt. Zudem verhindert der Einsatz einer Feder, dass es zu einem Klappern kommt, da das andere Element jederzeit sauber geführt ist.

Optimalerweise ist das zusätzliche Führungselement allerdings als Sitzelement ausgestaltet, welches das andere Element in der Zylinderbohrung zentriert, wenn es mit dem Sitzelement in Kontakt kommt. Das Sitzelement ist so positioniert und gestaltet, dass das andere Element nach Abheben von seinem Ventilsitz immer in der Nähe seines Ventilsitzes hält. So wird ein schnelles und sauberes Ansprechen gewährleistet, sobald die Steuerkolbeneinheit von der Lade- in die Entladeposition umschaltet.

Idealerweise ist zumindest eines der Sitzventile so gestaltet, dass sich im Bewegungszyklus des Steuerkolbeneinheit zwischen ihren beiden Extrempositionen eine Hysterese ergibt. Dies, indem die vom steuernd wirkenden Druck beaufschlagte Fläche an der Steuerkolbeneinheit kleiner wird, sobald die Steuerkolbeneinheit auf dem betreffenden Ventilsitz aufliegt, während die andere Seite der Steuerkolbeneinheit auf unverminderter Fläche dem Druck der Steuerleitung ausgesetzt ist. Auf diese Art und Weise ergibt sich eine Art Selbsthalteeffekt. Wenn der Druck in der Steuerleitung ausgereicht hat, um die Steuerkolbeneinheit einen Moment auf ihren Sitz zu drücken, dann öffnet die Steuerkolbeneinheit selbst dann nicht (unbeabsichtigt), wenn der Druck in der Steuerleitung etwas abfällt. Zudem ergibt sich auf diese Art und Weise, ggf. zusammen mit anderen, z.B. kraftbegrenzenden oder dämpfenden Maßnahmen, eine verlangsamte Bewegung der Steuerkolbeneinheit beim Umschalten. Sobald der Druck in der Steuerleitung fällt, wird die Steuerkolbeneinheit nicht sofort und "mit aller Härte" in ihre andere Position geschossen, sondern hebt erst von ihrem Sitz ab und wird dann zunehmend beschleunigt. Auf diese Art und Weise ist es möglich, ein perfektes Timing einzustellen, d. h. den Steuervorgang frühzeitig einzuleiten bzw. sicherzustellen, dass er sich erst dann auf den Verstärkerkolben auswirkt, wenn der Verstärkerkolben seine gewünschte Totpunktposition (OT/UT) erreicht hat - bei einer Freikolbenmaschine kann man genau genommen nicht von Totpunkten sprechen, gemeint sind daher die Punkte, an denen sich die Bewegung des Verstärkerkolbens im Idealfall umkehrt.

Auf diese Art und Weise kann der Hub des Verstärkerkolbens optimal ausgenutzt werden. Dies erhöht zwar nicht unbedingt die Arbeitsfrequenz und damit die Abgabeleistung des Druckübersetzers. Es verbessert aber den energetischen Wirkungsgrad und führt somit zu einer geringeren Erwärmung von Hydraulikfluid und Druckübersetzer im hochfrequenten Betrieb. Dies ist durchaus von Relevanz. Denn in der Praxis lässt sich die Arbeitsfrequenz eines Druckübersetzers gerade wegen des Wärmeumsatzes im Druckübersetzer bzw. in der Hydraulikflüssigkeit nicht in beliebige Höhen treiben (z. B. durch Erhöhung des Ladedrucks), da mit zunehmender Arbeitsfrequenz eine immer stärkere Erwärmung auftritt, die schließlich zu Kavitation und damit zu Zerstörungen führt.

Weitere Vorteile und Ausgestaltungsmöglichkeiten ergeben sich aus der nachfolgenden Figurenbeschreibung.

Die Fig. 1 zeigt ein erstes Ausführungsbeispiel des erfindungsgemäßen Druckübersetzers zu Beginn eines neuen Arbeitstaktes zur Herstellung von Hochdruck.

Die Fig. 2 zeigt eine Momentaufnahme des ersten Ausführungsbeispiels des erfindungsgemäßen Druckübersetzers in einer Position, in der die Steuerleitung gerade freigegeben wird, was die Steuerkolbeneinheit in Kürze zu einem Umsteuern veranlassen wird.

Die Fig. 3 zeigt das erste Ausführungsbeispiel des erfindungsgemäßen Druckübersetzers im oberen Totpunkt.

Die Fig. 4 zeigt eine Momentaufnahme des ersten Ausführungsbeispiels des erfindungsgemäßen Druckübersetzers zu einem Zeitpunkt, zu dem die Steuerleitung gerade wieder mit dem Hochdruckarbeitsraum HA verbunden wird und daraufhin die Steuerkolbeneinheit in Kürze umsteuern wird.

Die Fig. 5 zeigt einen Ausschnitt aus einem zweiten Ausführungsbeispiel des erfindungsgemäßen Druckübersetzers, der bis auf die Ausgestaltung der Steuerkolbeneinheit dem ersten Ausführungsbeispiel entspricht.

Die Fig. 6 zeigt die Steuerkolbeneinheit dieses zweiten Ausführungsbeispiels in einer anderen Position.

Die Fig. 7 zeigt einen Ausschnitt aus einem dritten Ausführungsbeispiel des erfindungsgemäßen Druckübersetzers, der bis auf die Ausgestaltung der Steuerkolbeneinheit dem ersten Ausführungsbeispiel entspricht.

Die Fig. 8 zeigt die Steuerkolbeneinheit dieses dritten Ausführungsbeispiels in einer anderen Position.

Die Fig. 9 zeigt eine genauere Ausgestaltung eines für alle Ausführungsbeispiele zu verwendenden als Bestandteil der Steuerkolbeneinheit 5 vorgesehenen Elements 5A.

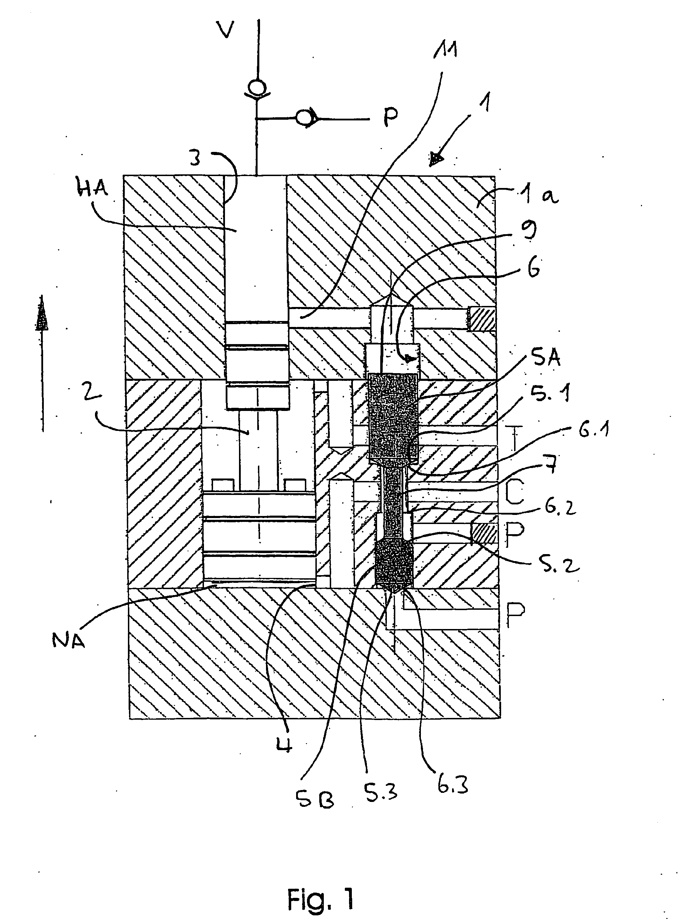

Die Fig. 1 zeigt ein Ausführungsbeispiel des erfindungsgemäßen Druckübersetzers, wie er vorzugsweise zur Druckerhöhung von Hydrauliköl oder Wasser verwendet wird, um damit z. B. Rettungsscheren, Spannvorrichtungen, mit Hochdruckfluidstrahl schneidende Werkzeugmaschinen und hydraulische Sprengvorrichtungen für Beton, Fels und dergl. zu versorgen. Gerade für den letztgenannten Einsatzzweck ist der Druckübersetzer in besonderem Maße prädestiniert, weil hierfür hochdruckseitig oft 2000 bar und mehr gefordert werden - die am einfachsten zu realisieren sind, wenn der verbraucherseitig angeordnete Druckübersetzer schon mit einem relativ hohen Speisedruck beaufschlagt werden kann, der ggf. seinerseits von einem Druckübersetzer erzeugt wird (Kaskadenschaltung). Denn dort, wo wegen der Begrenzung des Speisedrucks in letzter Stufe ein höheres Übersetzungsverhältnisse auf Seiten des Verstärkerkolbens realisiert werden muss, wird entweder die hochdruckseitige Abgabemenge deutlich kleiner oder aber der Druckübersetzer deutlich größer und schwerer.

Der Druckübersetzer besteht aus einem aus Fertigungsgründen mehrteiligen (hier dreiteiligen) Metallblock 1a. Die einzelnen Teile sind ineinander verschraubt, ggf. unter Einsatz entsprechender Dichtungen und Dehnschrauben.

Der Block 1 a ist mit zwei Zylinderbohrungen 3 und 4 versehen, in denen der als Differentialkolben ausgestaltete Verstärkerkolben 2 hin- und herläuft. Zugleich ist der Block 1a mit einer aus mehreren, vom Durchmesser her unterschiedlichen Zylinderabschnitten bestehenden Zylinderbohrung 6 versehen, in der die Steuerkolbeneinheit 5 hin- und herläuft.

Der Verstärkerkolben 2 bildet im Bereich seines kleinen Kolbenabschnitts mit der Zylinderbohrung 3 den sogenannten Hochdruckarbeitsraum HA und auf der anderen Seite, im Bereich seines großen Kolbenabschnitts, zusammen mit der Zylinderbohrung 4 den Niederdruckarbeitsraum NA. Der Hochdrucksarbeitsraum HA ist über eine sich verzweigende Leitung zum einen mit der zum Hochdruckverbraucher führenden Versorgungsleitung V verbunden. In dieser Versorgungsleitung ist ein Rückschlagventil eingebaut. Dies lässt nur dann Fluid in die Hochdruckversorgungsleitung passieren, wenn dieses Fluid einen gewissen Mindestarbeitsdruck besitzt, d. h. einen Mindesthochdruck. Zum anderen ist der Hochdruckarbeitsraum, ebenfalls unter Einsatz eines entsprechendes Rückschlagventils, mit der Niederdruckversorgungsleitung P verbunden. Solange im Hochdruckarbeitsraum HA Hochdruck anliegt, ist dieses Rückschlagventil geschlossen, so dass kein unter Hochdruck stehendes Fluid in die Niederdruckversorgungsleitung eintreten kann. Sobald der Druck in der Niederdruckversorgungsleitung höher ist, als im Hochdruckarbeitsraum HA, wird der Hochdruckarbeitsraum mit unter Niederdruck stehendem Fluid gefüllt.

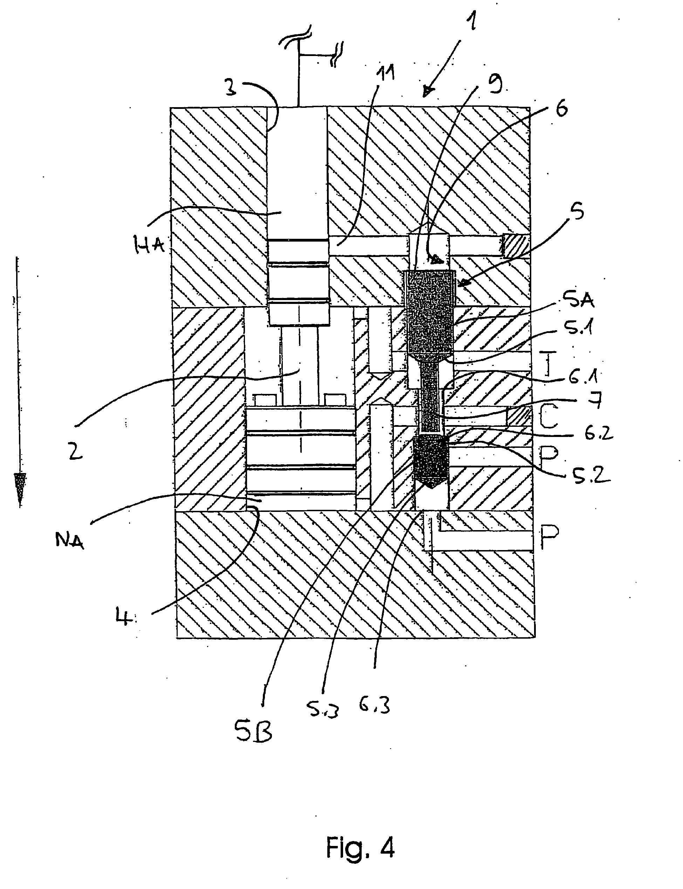

Die Steuerkolbeneinheit 5 besteht hier aus zwei Elementen 5A und 5B. Diese beiden Elemente sind nicht miteinander verbunden, in dem Sinne, dass keine dauerhafte feste Verbindung zwischen den beiden Elementen 5A und 5B besteht. Statt dessen lassen die beiden Elemente 5A und 5B in den von Fig. 1 und Fig. 4 gezeigten Positionen (Lade- und Entladeposition der Steuerkolbeneinheit) sogar einen kleinen Spalt zwischen sich frei um sich nicht gegenseitig in bezug auf ihre Abdichtfunktion zu behindern. Sie können dennoch während der Umschaltbewegung von der Lade in die Endladeposition zeitweilig aneinander anliegen und sich dann gemeinsam bewegen, bzw. sich gegenseitig eine Bewegung aufzwingen.

Jedes dieser Elemente bildet ein Sitzventil. Das Element 5A weist einen kegelförmigen Abschnitt 5.1 auf, der zusammen mit einem Gegenabschnitt 6.1 der Zylinderbohrung ein erstes Sitzventil bildet. Das Element 5B weist ebenfalls einen kegelförmigen Abschnitt 5.2 auf. Dieses bildet zusammen mit einem entsprechenden Gegenabschnitt 6.2 der Zylinderbohrung 6 ein Sitzventil. Darüber hinaus weist das zweite Element 5B einen weiteren kegelförmigen Abschnitt 5.3 auf, der zusammen mit einem entsprechenden Gegenabschnitt 6.3 in der Zylinderbohrung ein weiteres Sitzventil bildet. Die Gegenabschnitte 6.1, 6.2 und 6.3 können nicht besonders bearbeitet, also kantig bzw. allenfalls leicht angefast ausgeführt sein, wie hier gezeigt. Sie können aber auch mit einem kegeligen Sitz versehen sein.

Der Bewegungsablauf der Steuerkolbeneinheit 5 wird zum einen durch den Druck in der Steuerleitung bestimmt, der an der ersten Stirnseite 9 der Steuerkolbeneinheit 5 angreift und zum anderen durch den Druck, der an den verschiedenen Stirnseitenabschnitten der zweiten Stirnseite der Steuerkolbeneinheit 5 angreift.

Der Verzicht auf eine hochbelastete Feder bringt indes Vorteile mit sich. Denn es wird ein Bauteil eingespart, was Kosten spart und eine potentielle Fehlerquelle beseitigt (Federn sind immer gefährdet durch millionenfache Lastwechsel zu ermüden, d. h. Dauerbruch zu erleiden).

Der Druckübersetzer arbeitet wie folgt:

Die Fig. 1 zeigt den Beginn eines neuen Arbeitstaktes. Der Verstärkerkolben befindet sich im Bereich seines unteren Totpunkts. Die Steuerkolbeneinheit befindet sich in einer Position, die ein Füllen des Niederdruckarbeitsraums ermöglicht. Dabei ist eine der beiden Niederdruckspeiseleitungen P durch das Element 5B mittels dessen Sitzventil 5.3, 6.3 abgedichtet. Die andere Speiseleitung P steht über den Ringraum, der zwischen der Zylinderbohrung und dem stangenartigen Abschnitt 7 des Elements 5A frei bleibt, mit der Zylinderleitung C zum Niederdruckarbeitsraum in Verbindung. Der Niederdruckarbeitsraum NA wird so mit unter Niederdruck stehendem Fluid beladen. Gleichzeitig dichtet das Sitzventil 5.1, 6.1 des ersten Elements 5A die Abflussleitung T gegenüber dem unter Niederdruck stehenden Bereich ab.

Lediglich der Vollständigkeit halber sei festgehalten, dass die Zylinderleitung C beliebig kurz sein kann. Ihre einzige Funktion ist einen widerstandsarmen Zugang zum Niederdruckarbeitsraum NA bereitzustellen.

Der Verstärkerkolben 2 beginnt sich auf Grund dessen nach oben zu bewegen, d. h. ein neuer Arbeitstakt zur Erzeugung von Hochdruck beginnt.

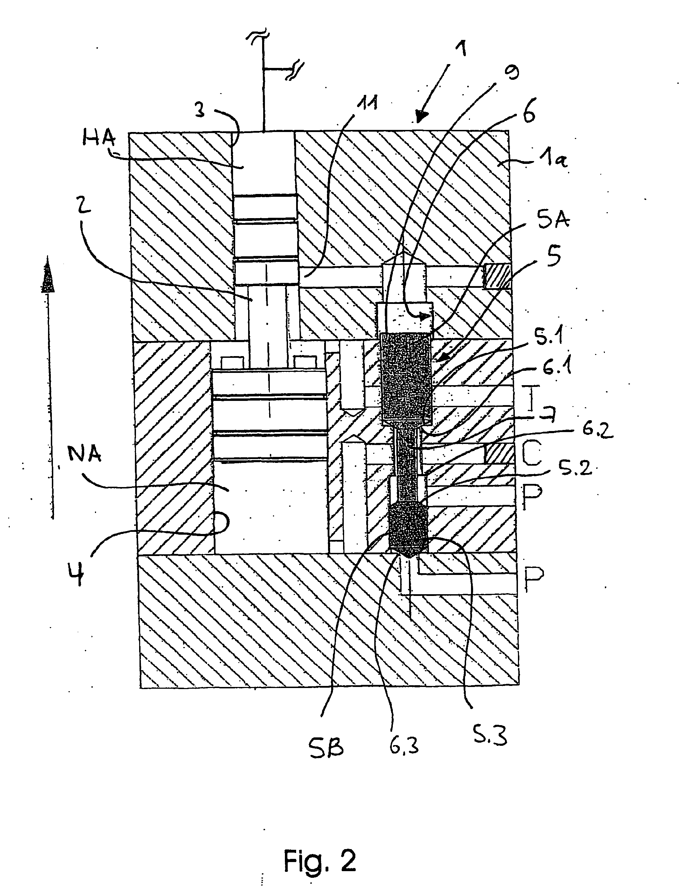

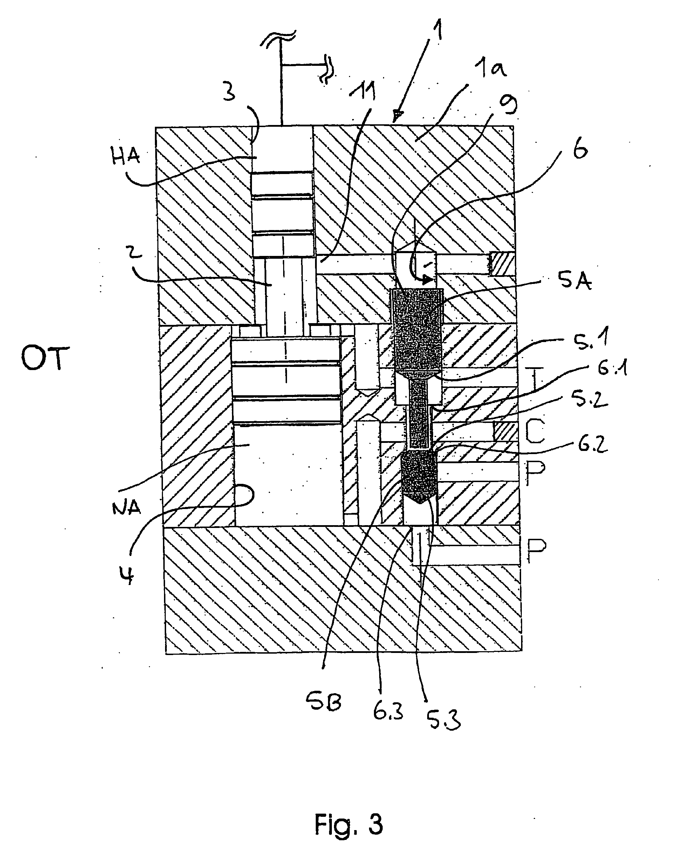

Der Verstärkerkolben 2, der bei richtiger Dimensionierung nun sehr schnell die Mündung der Steuerleitung 11 verschließt und so vor Beaufschlagung mit Hochduck schützt, setzt seinen Arbeitstakt geraume Zeit fort. Irgendwann erreicht er die von Fig. 2 erreichte Position. Diese Position hat der Verstärkerkolben 2 die Steuerleitung 11 bereits einen kurzen Augenblick lang freigegeben. Dies führt dazu, dass sich der bisher in der Steuerleitung 11 herrschende Druck in den Zwischenraum zwischen dem großen und dem kleinen Kolbenabschnitt des Verstärkerkolbens 2 abbaut, der mit der Tankleitung verbunden ist, also weitestgehend oder vollständig drucklos ist. Die Steuerkolbeneinheit 5 verharrt noch einen Augenblick lang in ihrer alten Position. Erst wenn der Druck in der Steuerleitung 11 fast vollständig abgebaut ist, beginnt sich die Steuerkolbeneinheit 5 zu bewegen. Dies deshalb, weil der Niederdruck, der an der zweiten Stirnseite des Elements 5A angreift, dort zunächst nur eine sehr kleine Angriffsfläche findet. Er kann momentan noch nicht auf die gesamte zweite Stirnseite des Elements 5A drücken, da ihm insoweit zunächst noch das geschlossene Sitzventil 5.1, 6.1 den Weg verlegt. Das nicht besonders massearme und damit relativ träge Element 5A hebt sich nun von seinem Sitz ab. Sodann wirkt der Niederdruck auf die gesamte zweite Stirnseite des Elements 5A ein. Die das Element 5A nach oben treibende Kraft vergrößert sich sprungartig. Das Element 5A,und damit letztendlich die gesamte Steuerkolbeneinheit 5 schnellt beschleunigt nun nach oben in die von Fig. 3 gezeigte Position.

In dieser Position bildet der kegelförmige Abschnitt 5.2 des zweiten Elements 5B zusammen mit dem Gegenabschnitt 6.2 ein Sitzventil, das nun geschlossen ist und die Niederdruckspeiseleitungen P gegenüber der Zylinderleitung C und der Abflussleitung T abdichtet. Die Zylinderleitung C steht nun über den Ringraum, der zwischen der Zylinderbohrung und dem stangenartigen Abschnitt 7 des Elements 5A frei bleibt, mit der Abflussleitung T in Verbindung. Der Niederdruckarbeitsraum wird nun zunächst drucklos.

Der Verstärkerkolben erreicht während dessen auf Grund seiner Masseträgheit und wegen der richtig eingestellten (nicht zu schnellen) Bewegungsgeschwindigkeit der Steuerkolbeneinheit gerade noch seinen oberen Totpunkt, wo der Ausstoß des unter Hochdruck stehendem Fluid in die Versorgungsleitung V endet.

Nun strömt aus der Niederdruckspeiseleitung P unter entsprechendem Druck in den Hochdruckarbeitsraum HD ein und drückt den Verstärkerkolben nach unten, wobei der Hochdruckarbeitsraum geladen und der Niederdruckarbeitsraum entladen wird.
Der Verstärkerkoben 2 bewegt sich nun immer weiter nach unten, bis er die von Fig. 4 gezeigte Position erreicht. In dieser Position beginnt er die Steuerleitung 11 mit dem Hochdruckarbeitsraum HD zu verbinden. Die bislang weitestgehend drucklose Steuerleitung 11 wird nun mit dem im Hochdruckarbeitsraum herrschenden Niederdruck beaufschlagt, das Umsteuern der Steuerkolbeneinheit 5, die sich zu dem von Fig. 4 gezeigten Zeitpunkt noch nicht bewegt hat, wird eingeleitet. Die Steuerkolbeneinheit 5 schnellt wieder in die von Fig. 1 gezeigte Position.

Der Verstärkerkolben 2 erreicht während dessen auf Grund seiner Masseträgheit und wegen der richtig eingestellten (nicht zu schnellen) Bewegungsgeschwindigkeit der Steuerkolbeneinheit gerade noch seinen unteren Totpunkt, wo das Entladen des Niederdruckarbeitsraumes HD und das Beladen des Hochdruckarbeitsraumes HD enden.

Der Zyklus beginnt nun von Neuem.

Bereits oben wurde angesprochen, dass die Bewegungsgeschwindigkeit der Steuerkolbeneinheit 5 nicht zu schnell sein darf. D. h. der Erfindung liegt die Erkenntnis zu Grunde, dass es bei Verwendung eines Verstärkerkolbens 2, wie dem hier gezeigten (und entsprechender Lage der Mündung der Steuerleitung relativ zum Verstärkerkolben) im Regelfall vorteilhaft ist, den die Steuerkolbeneinheit 5 eben nicht mit möglichst hoher Frequenz, d. h. möglichst "hart" von ihrer Lade- in ihre Entladeposition zu schießen und umgekehrt. Daher ist vorgesehen, dass Bewegung der Steuerkolbeneinheit 5 wie folgendermaßen verzögert abläuft:

Im Rahmen der Aufwärtsbewegung des Steuerkolbeneinheit 5 von aus der von Fig. 2 in die von Fig. 3 gezeigte Position bewegt sich im wesentlichen zunächst nur das Element 5A. Denn das Element 5B sieht solange beidseitig den gleichen Niederdruck, bis erstmals Verbindung zur Abflussleitung T hergestellt ist. Das Element 5A wird zunächst durch die relativ kleine Kraft des Niederdrucks betätigt, der an der kleinen Fläche der zweiten Stirnseite des Elements 5A angreift, die jenseits des Ventilsitzes zugänglich ist. Sobald das Element 5A von seinem Ventilsitz abgehoben hat, findet der Niederdruck an dem Element 5A eine größere Angriffsfläche. Die von ihm ausgeübte Kraft steigt an. Sie bleibt aber nicht konstant und nimmt auch nicht maximale Werte an, denn die Spaltleckage vorbei am kolbenförmigen Führungsabschnitt des Elements 5A hin zur Mündung der Abflussbohrung wird rapide größer - solange bis der kolbenförmige Führungsabschnitt am Element 5A die Mündung der Abflussbohrung freigibt und der am Element 5A angreifende und es nach oben treibende Druck in Folge momentanen hydraulischen Kurzschlusses weitgehend zusammenbricht. Spätestens in diesem Moment bzw. kurz zuvor stellt sich ein deutlicher Druckunterschied an den beiden Stirnseiten des Elements 5B ein, der das Element 5B nach oben treibt, so dass es sich an das Element 5A anlegt und nun das Element 5A vollends nach oben schiebt - obwohl am Element 5A selbst keine nennenswert treibende Druckdifferenz mehr anliegt. Dass damit der Betrag der die Steuerkolbeneinheit insgesamt nach oben treibenden Kraft abermals wechselt und die Steuerkolbeneinheit daher auch nicht mit der maximal möglichen Kraft nach oben geschossen wird, liegt auf der Hand.

Die Abwärtsbewegung der Steuerkolbeneinheit wird ebenfalls gedämpft - sobald das Element 5A die Abflussbohrung völlig überquert hat, wird Öl zwischen dem Element 5A und seinem Ventilsitz im Gehäuse eingeschlossen, das ausschließlich längs des Ringspaltes zwischen dem stangenartigen Fortsatz und der Zylinderbohrung verdrängt werden kann, so zeitweilig einen gewissen Gegendruck aufbaut und damit den Aufprall des Elements 5A auf seinen Ventilsitz mindert.

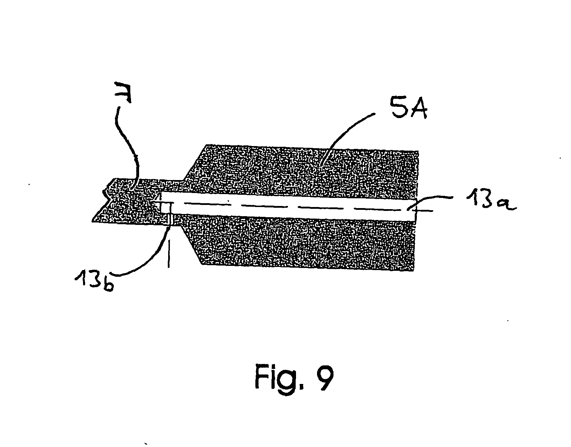

Schließlich wird die Bewegungsgeschwindigkeit der Steuerkolbeneinheit 5 auch durch die von Fig. 9 gezeigte Ausführung des Elements 5A begrenzt, was später noch erläutert wird.

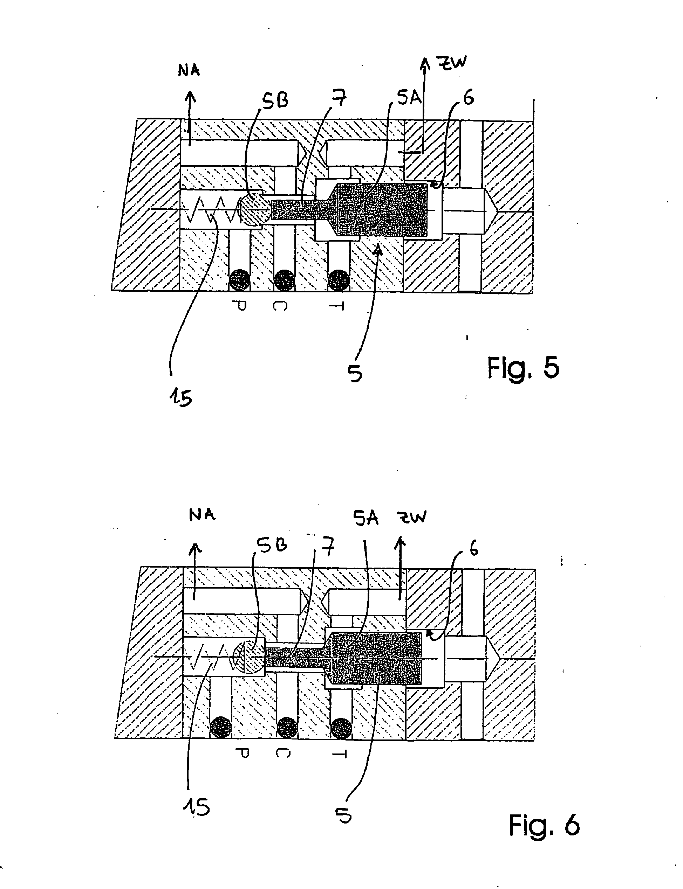

Die Fig. 5 und 6 zeigen eine alternative Ausgestaltung der für den Druckübersetzer 1 zu verwendenden Ventileinheit. Der Bereich um den Arbeitskolben herum wird hier nicht mehr gezeigt, er ist so ausgestaltet, wie von den Fig. 1 bis 4 gezeigt. Der Pfeil "NA" deutet die Verbindung zum Niederdruckarbeitsraum NA an, der Pfeil "ZW" deutet die Verbindung zu dem Zwischenraum an, den der Hochdruckabschnitt und der Niederdruckabschnitt des Verstärkerkolbens 2 zwischen sich einschließen. Diese Verbindungen sind (was hier nicht gezeigt wird) so zu gestalten, wie bei den Fig. 1 bis 4.

Die Steuerkolbeneinheit 5 besteht hier aus dem wie gehabt gestalteten Element 5A und dem nunmehr kugelig ausgestalteten Element 5B. Das erste Element 5A bildet auf die gleiche Art und Weise ein Sitzventil, wie oben an Hand der Fig. 1 bis 4 beschrieben. Das Kugelelement 5B bildet mit seiner kugelförmigen Außenoberfläche zusammen mit dem Abschnitt 6.2 der Zylinderbohrung 6 wiederum ein Sitzventil. Der Abschnitt 6.2 kann angefast oder gänzlich unbearbeitet sein, ist aber vorzugsweise kegelig oder kugelig ausgeführt und an den entsprechenden Abschnitt 5.2 des Kugelelements 5B angepasst. Die Besonderheit hier ist, dass das Kugelelement 5B in einer mit deutlichem Übermaß versehenen Zylinderbohrung läuft, sobald das Kugelelement 5B von seinem Ventilsitz abgehoben ist. Es kann daher um das Kugelelement 5B herum Fluid von der Niederdruckspeiseleitung P zur Zylinderleitung C hin fließen, um den Niederdruckarbeitsraum NA des Arbeitskolbens zu beladen - ohne, dass hierbei ein allzu großer hydraulischer Widerstand überwunden werden muss.

Es bedarf nicht zwingend eines (Verkantungsfreiheit garantierenden) Kugelelements, um den von Fig. 5 und 6 gezeigten Effekt zu erreichen. Denkbar, aber nicht gezeigt, wäre auch die Verwendung einer kolbenförmigen Ausgestaltung mit entsprechendem Untermaß gegenüber der Zylinderbohrung und einem für den Federangriff ausgebildeten Ansatz.

Als Führungselement 15 fungiert hier eine Schraubenfeder, deren Durchmesser so ausgelegt ist, dass das Kugelelement 5B in ihr einen guten Halt findet. Die Feder führt das Kugelelement 5B und hält es in definierter Position. So wird nicht nur ein Klappern verhindert, sondern vor allem auch sichergestellt, dass das Kugelelement 5B bei der von Fig. 6 gezeigten Stellung des Ventilelements 5 nicht allzu weit von seinem Sitz entfernt ist und daher entsprechend schnell anspricht, wenn die Steuerkolbeneinheit 5 umschaltet.

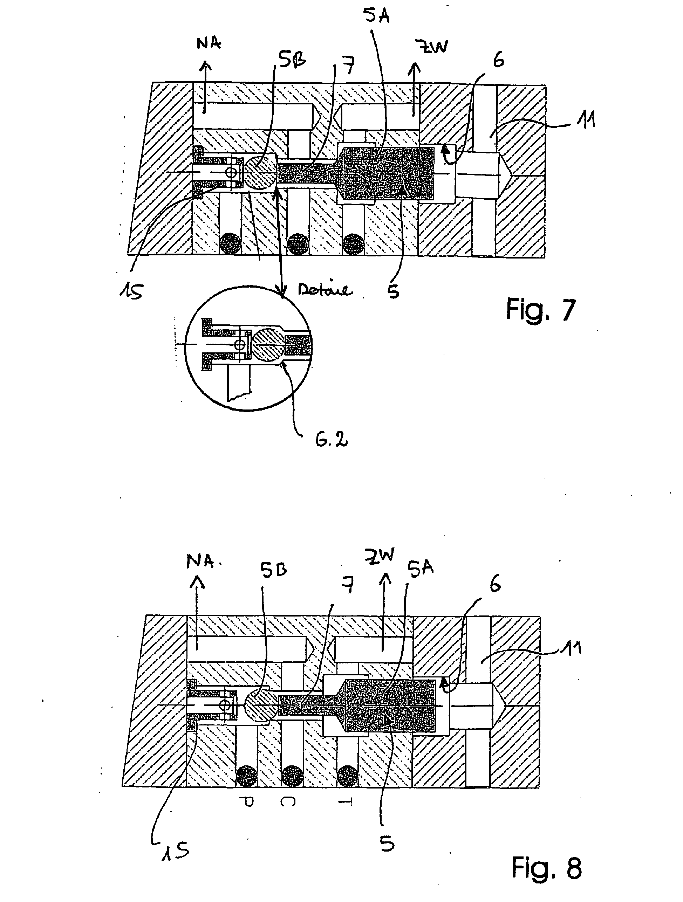

Die Fig. 7 und 8 zeigen ein weiteres Alternativbeispiel für die Steuerkolbeneinheit. Das zu den Fig. 5 und 6 Gesagte gilt hier sinngemäß.

Der einzige Unterschied besteht in der Art des verwendeten Führungselements 15. Hier wird keine Feder als Führungselement für das Kugelelement 5B verwendet, sondern eine Sitzhülse. Diese Sitzhülse stellt sicher, dass das Kugelelement 5B dann, wenn die Steuerkolbeneinheit 5 die von Fig. 7 gezeigte Position einnimmt, in einer definierten Stellung nicht allzu weit entfernt von seinem Ventilsitz gehalten wird. Auf diese Art und Weise ist auch hier sichergestellt, dass das Kugelelement 5B schnell und präzise anspricht, sobald die Steuerkolbeneinheit 5 umschaltet. Anzumerken ist noch, dass die ganze Konstruktion so dimensioniert ist, dass dem Kugelelement 5B in der von Fig. 7 gezeigten Position ein bestimmtes, kleines Spiel zwischen dem Führungselement 15 und dem anderen Element 5A verbleibt. Auf diese Art und Weise wird sichergestellt, dass Verschmutzungen oder Toleranzabweichungen nicht etwa dazu führen, dass das erste Element 5A womöglich nicht mehr ganz die Position erreicht, in dem es im Wesentlichen dicht auf seinem Ventilsitz anliegt.

Sofern statt einer kugeligen eine kolbenförmige Gestaltung eingesetzt wird, wie oben angesprochen, gilt das zuvor Gesagte sinngemäß.

Die Fig. 9 zeigt eine Ausgestaltung des einen Bestandteil der Steuerkolbeneinheit bildenden Elements 5A. Ein Element 5A mit dieser Ausgestaltung wird idealer weise für alle der zuvor beschriebenen Ausführungsbeispiele eingesetzt werden.

Das Element 5A ist hier in axialer Richtung über einen weiten Bereich hinweg mit einer Sacklochbohrung 13a versehen. Diese Sacklochbohrung 13a verläuft von der Seite 9 des Elements 5A aus, die dem Druck der Steuerleitung 11 ausgesetzt ist, in axialer Richtung einwärts. An geeigneter Stelle kommuniziert diese Sacklochbohrung 13a mit einer Düsenbohrung 13b eines kleinen Durchmessers von etwa 0,1 bis 1,2 mm, vorzugsweise von etwa 0,1 bis 0,8 mm. Der im konkreten Einzelfall geeignete Bohrungsdurchmesser lässt sich leicht an Hand von Versuchen ermitteln, wenn man berücksichtigt, was mit der Düsenbohrung 13b erreicht werden soll.

Diese Düsenbohrung 13b hat zweierlei Effekte.

Wenn sich die Steuerkolbeneinheit in der von Fig. 1 gezeigten Position befindet, dann fließt bei der erfindungsgemäßen Konstruktion i. d. R. ein Leckagestrom von der Steuerleitung 11 in die Abflussleitung. Denn bei der erfindungsgemäßen Konstruktion ist die Zylinderbohrung 6 ja nicht mehr gehont, sondern mit einer demgegenüber vergleichbar großzügigen Passung ausgeführt, i. d. R. einer Übergangspassung. Der kolbenförmige Abschnitt des Elements 5A vermag daher (jedenfalls im Falle gröberer Passung) die Steuerleitung nicht mehr weitestgehend abzudichten, anders als der entsprechende Kolbenabschnitt bei der vorbekannten Konstruktion. Das führt, solange keine Gegenmaßnahmen getroffen werden, dazu, dass die Steuerleitung vorzeitig ihren Druck verliert und die Steuerventileinheit nicht mehr in der von Fig. 1 gezeigten Position halten kann. Das ist nicht tolerabel. Hier schafft die Düsenbohrung 13b Abhilfe. Denn sie liegt in der von Fig. 1 gezeigten Position der Steuerkolbeneinheit 5 in einem Bereich, in dem Niederdruck herrscht. Sie speist auf Grund dessen die Steuerleitung 11 mit Niederdruckfluid und gleicht so deren Leckageverluste aus.

Der Düsenbohrung 13b kommt aber im Regelfall noch eine weitere wichtige Aufgabe zu. Solange das Element 5A nicht dichtend auf seinem Ventilsitz aufliegt, steht die Düsenbohrung13b der Abflussleitung T in Verbindung. Sie bläst so einen Teil des auf ihrer anderen Seite anliegenden Drucks zur Abflussleitung T hin ab, insbesondere den in der Steuerleitung 11 anliegenden Druck bei der Bewegung der Steuerkolbeneinheit von ihrer in Fig. 4 gezeigten Position in ihre von Fig. 1 gezeigte Position. Dies ist eine weitere Maßnahme im Canon der verschiedenen Maßnahmen zur Begrenzung der Bewegungsgeschwindigkeit der Steuerkolbeneinheit 5.

## Patentansprüche

1. Druckübersetzer (1) für Fluide, insbesondere Hydraulikflüssigkeiten, mit einem als Differenzialkolben ausgestalteten Verstärkerkolben (2) und einer Steuerkolbeneinheit (5), wobei der Druckübersetzer (1) so ausgebildet ist, dass die Niederdruckseite (NA) des Verstärkerkolbens (2) mittels der Steuerkolbeneinheit (5) über eine Zylinderleitung (C) wechselweise mit einer Niederdruckspeiseleitung (P) und einer Abflussleitung (T) verbindbar ist und die Hochdruckseite (HA) des Verstärkerkolbens (2) wechselweise mit einer Hochdruckverbraucherleitung (V) und einer Niederdruckspeiseleitung (P) verbindbar ist und der Verstärkerkolben (2) des weiteren über eine Steuerleitung (11) derart mit der Steuerkolbeneinheit (5) zusammmenwirkt dass zum einen der an der Steuerleitung (11) anliegende Druck, der an einer ersten Stirnseite (9) der Steuerkolbeneinheit (5) angreift, und zum anderen der Druck, der an den verschiedenen Stimseitenabschnitten der zweiten Stirnseite der Steuerkolbeneinheit (5) angreift, die Position der Steuerkolbeneinheit (5) bestimmen, wormit auf eine hochbelastete Feder verzichtet wird, **dadurch gekennzeichnet, dass** die Steuerkolbeneinheit (5) zwei als Sitzventil ausgebildete und mit je einem Ventilsitz (6.1 bzw. 6.2) zusammenwirkende Elemente (5A, 5B) aufweist, die so gestaltet sind, dass eines der Elemente (5B) zeitweilig die mit der Niederdruckseite (NA) des Verstärkerkolbens (2) verbindbare Nieder druckspeiseleitung (P) gegenüber der Zylinderleitung (C) und der Abflussleitung (T) abdichtet und das andere der Elemente (5A) zeitweilig die mit der Niederdruckseite (NA) des Vetstärkerkolbens (2) verbindbare Abflussleitung (T) gegenüber der Zylinderleitung (C) und der Niederdruckspeiseleitung (P) abdichtet, wobei eines der Elemente (5A) kolbenförmig ausgebildet ist und einen stangenartigen Abschnitt (7) zur Einwirkung auf das andere Element (5B) aufweist, der dazu beiträgt, zu gegebener Zeit die Abflussleitung und zu gegebener Zeit die Nieder druckspeiseleitung mit der mit der Zylinderleitung zu verbinden, über den Ringraum, der zwischen der Zylinderbohrung und dem stangenartigen Abschnitt (7) des Elements (5A) frei bleibt.

2. Druckübersetzer (1) nach Anspruch 1. **dadurch gekennzeichnet, dass** die Elemente (5A, 5B) nicht miteinander verbunden sind.

3. Druckübersetzer (1) nach Anspruch 1, **dadurch gekennzeichnet, dass** die Elemente (5A, 5B) miteinander verbunden sind, so dass sie sich stets gemeinsam bewegen.

4. Druckübersetzer (1) nach einem der vorhergehenden Ansprüche, **dadurch gekennzeichnet, dass** das andere der Elemente (5B) ebenfalls kolbenförmig ausgebildet ist.

5. Druckübersetzer (1) nach einem der Ansprüche 1 bis 4, **dadurch gekennzeichnet, dass** das andere der Elemente (5B) kugelförmig bzw. eine Vollkugel ist.

6. Druckübersetzer (1) nach einem der vorhergehenden Ansprüche, **dadurch gekennzeichnet, dass** das Element (5B), das zeitweilig die mit der Niederdruckseite (NA) des Verstärkerkolbens (2) verbindbare Niederdruckspeiseleitung (P) gegenüber der Zylinderleitung (C) und der Abflussleitung (T) abdichtet, während der Beladung des Niederdruckarbeitsraums NA zwischen der niederdruckleitung und der Zylinderleitung (C) liegt und derart in dem ihm zugeordneten Zylinder gelagert ist, dass Fluid zur Beladung des Niederdruckarbeitsraums (NA) von der Niederdruckspeiseleitung (P) an dem besagten Element (5B) vorbei in die Zylinderleitung (C) zum Niederdruckarbeitsraum (NA) strömen kann.

7. Druckübersetzer (1) nach Anspruch 6, **dadurch gekennzeichnet, dass** Fluid zur Beladung des Niederdruckarbeitsraums (NA) von der Niederdruckspeiseleitung (P) ausschließlich bzw. im Wesentlichen ausschließlich an dem besagten Element (5B) vorbei in die Zylinderleitung (C) zum Niederdruckarbeitsraum (NA) strömen kann.

8. Druckübersetzer (1) nach Anspruch 6 oder 7, **dadurch gekennzeichnet, dass** neben dem das andere Element (5B) aufnehmenden Zylinder ein zusätzliches Führungselement 15 zur zumindest teilweisen Führung bzw. Positionskontrolle des anderen Elements (5B) vorhanden ist.

9. Druckübersetzer (1) nach Anspruch 8, **dadurch gekennzeichnet, dass** das zusätzliche Führungselement eine Feder ist.

10. Druckübersetzer (1) nach Anspruch 8, **dadurch gekennzeichnet, dass** das zusätzliche Führungselement ein Sitzelement ist, das das andere Element (5B) in der Zylinderbohrung zentriert, wenn es mit dem Sitzelement in Kontakt kommt.

11. Druckübersetzer (1) nach einem der vorhergehenden Ansprüche, **dadurch gekennzeichnet, dass** das Element (5A), das zeitweilig die mit dem Niederdruckarbeitsraum (NA) des Verstärkerkolbens (2) verbindbare Abflussleitung (T) gegenüber der Niederdruckspeiseleitung (P) und der Zylinderleitung (C) abdichtet, mit einer Bohrung 13a versehen ist, dessen eines Ende in die Steuerleitung (11) mündet und dessen anderes Ende, je nach Stellung der Steuerkolbeneinheit (5), über eine Drossel- oder Düsenbohrung 13b zeitweilig mit einem Niederdruck führenden Bereich in Verbindung und zeitweilig mit einem weitgehend drucklosen Bereich in Verbindung steht.

12. Druckübersetzer (1) nach einem der vorhergehenden Ansprüche, **dadurch gekennzeichnet, dass** der Steuerkolbeneinheit (5) aufnehmende Bereich der Steuerzylinderbohrung (6) aus drei Abschnitten unterschiedlichen Durchmessers besteht, wobei der Abschnitt mit dem kleinsten Durchmesser zwischen zwei anderen Abschnitten angeordnet ist.

13. Druckübersetzer (1) nach Anspruch 12, **dadurch gekennzeichnet, dass** der mit der Steuerkolbeneinheit (5) zusammenwirkende Bereich der Steuerzylinderbohrung (6) aus vier oder fünf Abschnitten unterschiedlichen Durchmessers besteht.

14. Druckübersetzer (1) nach einem der vorhergehenden Ansprüche, **dadurch gekennzeichnet, dass** der Druckübersetzer (1) an einem Element (5B) einen als Sitzventil ausgebildeten und mit einem weiteren Ventilsitz (6.3) zusammenwirkenden Abschnitt (5.3) aufweist, wobei dieser Abschnitt (5.3) dichtend auf seinem Sitz (6.3) aufliegt, wenn sich die Steuerkolbeneinheit (5) in ihrer die Niederdruckspeiseleitung (P) mit der Zylinderleitung (C) verbindenden Endposition befindet.

15. Druckübersetzer (1) nach einem der vorhergehenden Ansprüche, **dadurch gekennzeichnet, dass** der Druckübersetzer (1) mehrere Steuerkolbeneinheiten (5) der im kennzeichnenden Teil des Anspruchs 1 beschriebenen Art aufweist, die Niederdruckseite (NA) eines einzigen, gemeinsamen Verstärkerkolbens (2) über Zylinderleitungen wechselweise mit mindestens einer Niederdruckspeiseleitung (P) und mindestens einer Abflussleitung (T) verbinden.

## Claims

1. Pressure booster (1) for fluids, in particular hydraulic fluids, having a booster piston (2) which is embodied as a differential piston and having a control piston unit (5), wherein the pressure booster (1) is embodied such that the low-pressure side (NA) of the booster piston (2) can be alternately connected by means of the control piston unit (5) via a cylinder line (C) to a low-pressure feed line (P) and an outlet line (T), and the high-pressure side (HA) of the booster piston (2) can be alternately connected to a high-pressure load line (V) and a low-pressure feed line (P), and the booster piston (2) also interacts with the control piston unit (5) by means of a control line (11) in such a way that, on the one hand, the pressure which prevails in the control line (11) and acts on a first end face (9) of the control piston unit (5), and on the other hand, the pressure acting on the various end face sections of the second end face of the control piston unit (5), determine the position of the control piston unit (5), whereby a highly loaded spring is omitted, **characterized in that** the control piston unit (5) has two elements (5A, 5B) which are embodied as seat valves and which interact with in each case one valve seat (6.1 and 6.2) and which are designed such that one of the elements (5B) intermittently seals off the low-pressure feed line (P), which can be connected to the low-pressure side (NA) of the booster piston (2), with respect to the cylinder line (C) and the outlet line (T), and the other element (5A) intermittently seals off the outlet line (T), which can be connected to the low-pressure side (NA) of the booster piston (2), with respect to the cylinder line (C) and the low-pressure feed line (P), wherein one of the elements (5A) is formed to be piston-shaped and has a rod-like section (7) for acting on the other element (5B), which rod contributes to connecting, in due course, the outlet line and, in due course, the low-pressure feed line with the cylinder line, via the annular chamber, which remains free between the cylinder bore and the rod-like section (7) of the element (5A).

2. Pressure booster (1) according to claim 1, **characterized in that** the elements (5A, 5B) are not connected with each other.

3. Pressure booster (1) according to claim 1, **characterized in that** the elements (5A, 5B) are connected with each other, so that they always move together.

4. Pressure booster (1) according to one of the preceding claims, **characterized in that** the other one of the elements (5B) is also formed to be piston-shaped.

5. Pressure booster (1) according to one of the claims 1 to 4, **characterized in that** the other one of the elements (5B) is spherical or a full sphere.

6. Pressure booster (1) according to one of the preceding claims, **characterized in that** the element (5B), which intermittently seals the low-pressure feed line (P) connectable with the low-pressure side (NA) of the booster piston (2) with respect to the cylinder line (C) and the outlet line (T), is located between the low-pressure line and the cylinder line (C) when the low-pressure working chamber (NA) is filled and is arranged in the cylinder associated with it in such a way that fluid can flow from the low-pressure feed line (P) past said element (5B) into the cylinder line (C) to the low-pressure working chamber (NA) in order to fill the low-pressure working chamber (NA).

7. Pressure booster (1) according to claim 6, **characterized in that that** fluid can flow from the low-pressure feed line (P) exclusively or substantially exclusively past said element (5B) into the cylinder line (C) to the low-pressure working chamber (NA) in order to fill the low-pressure working chamber (NA).

8. Pressure booster (1) according to claim 6 or 7, **characterized in that,** apart from the cylinder accommodating the other element (5B), an additional guiding element 15 for the at least partial guidance or position control of the other element (5B) is provided.

9. Pressure booster (1) according to claim 8, **characterized in that** the additional guiding element is a spring.

10. Pressure booster (1) according to claim 8, **characterized in that** the additional guiding element is a seat element which centers the other element (5B) in the cylinder bore when it comes into contact with the seat element.

11. Pressure booster (1) according to one of the preceding claims, **characterized in that** the element (5A), which intermittently seals the outlet line (T) connectable with the low-pressure working chamber (NA) of the booster piston (2) with respect to the low-pressure feed line (P) and the cylinder line (C), is provided with a bore 13a, the one end of which opens into the control line (11) and the other end of which, depending on the position of the control piston unit (5), is intermittently connected with an area under low pressure via a throttle or nozzle bore 13b, and intermittently connected with a largely pressureless area.

12. Pressure booster (1) according to one of the preceding claims, **characterized in that** the area of the control cylinder bore (6) accommodating the control piston unit (5) comprises three sections of different diameters, wherein the section with the smallest diameter is disposed between the two other sections.

13. Pressure booster (1) according to claim 12, **characterized in that** the area of the control cylinder bore (6) interacting with the control piston unit (5) comprises four or five sections of different diameters.

14. Pressure booster (1) according to one of the preceding claims, **characterized in that** the pressure booster (1), on one element (5B), has a section (5.3) formed as a seat valve and interacting with another valve seat (6.3), wherein this section (5.3) sealingly abuts its seat (6.3) when the control piston unit (5) is located in its final position connecting the low-pressure feed line (P) with the cylinder line (C).

15. Pressure booster (1) according to one of the preceding claims, **characterized in that** the pressure booster (1) has a plurality of control piston units (5) of the kind described in the characterizing portion of claim 1, which connect the low-pressure side (NA) of a single joint booster piston (2) via cylinder lines alternately with at least one low-pressure feed line (P) and at least one outlet line (T).

## Revendications

1. Multiplicateur de pression (1) pour fluides, en particulier pour liquides hydrauliques, comprenant un piston amplificateur (2) réalisé sous forme de piston différentiel et une unité à piston de commande (5), ledit multiplicateur de pression (1) étant réalisé de telle manière que le côté à basse pression (NA) du piston amplificateur (2) est susceptible d'être relié au moyen de l'unité à piston de commande (5) via une conduite à cylindre (C) alternativement avec une conduite d'alimentation à basse pression (P) et une conduite d'évacuation (T), et le côté à haute pression (HA) du piston amplificateur (2) est susceptible d'être relié alternativement avec une conduite d'utilisation à haute pression (V) et une conduite d'alimentation à basse pression (P), et le piston amplificateur (2) coopère en outre via une conduite de commande (11) avec l'unité à piston de commande (5) de telle manière que d'une part la pression appliquée à la conduite de commande (11), qui agit sur un premier côté frontal (9) de l'unité à piston de commande (5), et d'autre part la pression qui agit sur les différentes portions de la seconde face frontale de l'unité à piston de commande (5) déterminent la position de l'unité à piston de commande (5), grâce à quoi il est possible de se passer d'un ressort à forte charge, **caractérisé en ce que** l'unité à piston de commande (5) comprend deux éléments (5A, 5B) réalisés sous forme de valve à siège et coopérant chacun avec un siège de valve respectif (6.1 ou 6.2) qui sont conçus de telle manière que l'un des éléments (5B) obture temporairement la conduite d'alimentation à basse pression (P), susceptible d'être reliée avec le côté à basse pression (NA) du piston amplificateur (2) vis-à-vis de la conduite à cylindre (C) et la conduite d'évacuation (T), et l'autre des éléments (5A) obture temporairement la conduite d'évacuation (T) susceptible d'être reliée avec le côté à basse pression (NA) du piston amplificateur (2) vis-à-vis de la conduite à cylindre (C) et la conduite d'alimentation à basse pression (P), et l'un des éléments (5A) est réalisé sous forme de piston et comprend un tronçon (7) semblable à une tige pour agir sur l'autre élément (5B), celui-ci contribuant le moment venu à relier la conduite d'évacuation avec la conduite à cylindre et le moment venu à relier la conduite d'alimentation à basse pression avec la conduite à cylindre via l'espace annulaire qui demeure libre entre le perçage cylindrique et le tronçon (7) semblable à une tige de l'élément (5A).

2. Multiplicateur de pression (1) selon la revendication 1, **caractérisé en ce que** les éléments (5A, 5B) ne sont pas reliés l'un à l'autre.

3. Multiplicateur de pression (1) selon la revendication 1, **caractérisé en ce que** les éléments (5A, 5B) sont reliés l'un à l'autre de telle manière qu'ils se déplacent toujours conjointement.

4. Multiplicateur de pression (1) selon l'une des revendications précédentes, **caractérisé en ce que** l'autre des éléments (5B) est également réalisé sous forme de piston.

5. Multiplicateur de pression (1) selon l'une des revendications 1 à 4, **caractérisé en ce que** l'autre des éléments (5B) a une forme sphérique ou est une sphère pleine.

6. Multiplicateur de pression (1) selon l'une des revendications précédentes, **caractérisé en ce que** l'élément (5B) qui obture temporairement la conduite d'alimentation à basse pression (P), susceptible d'être reliée au côté à basse pression (NA) du piston amplificateur (2), vis-à-vis de la conduite à cylindre (C) et la conduite d'évacuation (T), se trouve, pendant le chargement de la chambre de travail à basse pression (NA), entre la conduite à basse pression et la conduite à cylindre (C) et est monté dans le cylindre qui lui est associé de telle façon que le fluide destiné au chargement de la chambre de travail à basse pression (NA) est capable de s'écouler depuis la conduite d'alimentation à basse pression (P) en contournant l'élément précité (5B) jusque dans la conduite à cylindre (C) vers la chambre de travail à basse pression (NA).

7. Multiplicateur de pression (1) selon la revendication 6, **caractérisé en ce que** le fluide destiné au chargement de la chambre de travail à basse pression (NA) est capable de s'écouler depuis la conduite d'alimentation à basse pression (P) exclusivement ou sensiblement exclusivement en contournant l'élément précité (5B) jusque dans la conduite à cylindre (C) vers la chambre de travail à basse pression (NA).

8. Multiplicateur de pression (1) selon la revendication 6 ou 7, **caractérisé en ce que**, outre le cylindre qui reçoit l'autre élément (5B), il est prévu un élément de guidage additionnel (15) pour le guidage ou le contrôle de position au moins partiel de l'autre élément (5B).

9. Multiplicateur de pression (1) selon la revendication 8, **caractérisé en ce que** l'élément de guidage additionnel est un ressort.

10. Multiplicateur de pression (1) selon la revendication 8, **caractérisé en ce que** l'élément de guidage additionnel est un élément à siège, qui centre le l'autre élément (5B) dans le perçage cylindrique lorsqu'il vient en contact avec l'élément à siège.

11. Multiplicateur de pression (1) selon l'une des revendications précédentes, **caractérisé en ce que** l'élément (5A) qui obture temporairement la conduite d'évacuation (T), susceptible d'être reliée avec la chambre de travail à basse pression (NA) du piston amplificateur (2), vis-à-vis de la conduite d'alimentation à basse pression (P) et de la conduite à cylindre (C), est doté d'un perçage (13a) dont une extrémité débouche dans la conduite de commande (11), et dont l'autre extrémité communique, via un perçage d'étranglement ou un perçage de tuyère (13b), selon la position de l'unité à piston de commande (5), temporairement avec une région où règne une basse pression et temporairement avec une région largement sans pression.

12. Multiplicateur de pression (1) selon l'une des revendications précédentes, **caractérisé en ce que** la région du perçage (6) du cylindre de commande qui reçoit l'unité à piston de commande (5) est constituée de trois tronçons de diamètres différents, dans lesquels le tronçon présentant le plus petit diamètre est agencé entre les deux autres tronçons.

13. Multiplicateur de pression (1) selon la revendication 12, **caractérisé en ce que** la région du perçage (6) du cylindre de commande, qui coopère avec l'unité à piston de commande (5), est constituée de quatre ou cinq tronçons de diamètres différents.

14. Multiplicateur de pression (1) selon l'une des revendications précédentes, **caractérisé en ce que** le multiplicateur de pression (1) comprend, sur un élément (5B), un tronçon (5.3) réalisé sous forme de valve à siège et coopérant avec un autre siège de valve (6.3), ledit tronçon (5.3) s'appliquant de manière étanche sur son siège (6.3) quand l'unité à piston de commande (5) se trouve dans sa position finale qui relie la conduite alimentation à basse pression (P) avec la conduite à cylindre (C).

15. Multiplicateur de pression (1) selon l'une des revendications précédentes, **caractérisé en ce que** le multiplicateur de pression (1) comprend plusieurs unités à piston de commande (5) du type décrit dans la partie caractérisante de la revendication 1, qui relient le côté à basse pression (NA) d'un unique piston amplificateur commun (2) alternativement, via des conduites à cylindre, avec au moins une conduite d'alimentation à basse pression (P) et au moins une conduite d'évacuation (T).
